# EUROPEAN PATENT SPECIFICATION

(11) **EP 1 645 906 B1**
(45) Date of publication and mention of the grant of the patent: **25.06.2008**
(21) Application number: 05107709.7
(22) Date of filing: 23.08.2005
(51) Int. Cl.: G03B 21/16, H04N 5/74, F21V 29/00

(54) **LED illumination unit for an image display apparatus**
LED Lichtquelle für eine Bildschirmvorrichtung
Source lumineuse à LED pour un appareil d'affichage d'image

(30) Priority: 01.10.2004 KR 2004078270
(43) Date of publication of application: 12.04.2006
(73) Proprietor: Samsung Electronics Co., Ltd, Suwon-si, Gyeonggi-do 442-742 (KR)
(72) Inventor: Kim, Su-gun 208-1802 Shinyoungtong Hyundai Apt., Gyeonggi-do (KR); Kim, Dae-sik 824-706 Woosung Apt., Suwon-si Gyeonggi-do (KR); Seong, Ki-bum 506-703 Mokryun Woosung Apt., Gyeonggi-do (KR); Lee, Kye-hoon 848-203 Byuckjeokgol 8-danji, Yeongtong-gu Suwon-si Gyeonggi-do (KR)
(74) Representative: Read, Matthew Charles

(56) References cited:
- EP-A- 0 271 956
- EP-A- 1 439 412
- PATENT ABSTRACTS OF JAPAN vol. 1999, no. 08, 30 June 1999 (1999-06-30) -& JP 11 064849 A (SANYO ELECTRIC CO LTD), 5 March 1999 (1999-03-05)
- PATENT ABSTRACTS OF JAPAN vol. 2003, no. 12, 5 December 2003 (2003-12-05) -& JP 2004 053949 A (NEC VIEWTECHNOLOGY LTD), 19 February 2004 (2004-02-19)
- PATENT ABSTRACTS OF JAPAN vol. 2000, no. 09, 13 October 2000 (2000-10-13) -& JP 2000 180962 A (SONY CORP), 30 June 2000 (2000-06-30)

## Description

The present invention relates to an illumination unit and an image display apparatus employing the same.

In general, an image projecting apparatus includes an illumination unit to illuminate an optical modulation element. Typically, a metal halide lamp or a super high-pressure mercury lamp is used as a light source of the illumination unit. The physical size of a metal halide lamp or super high-pressure mercury lamp is very large, thus an illumination unit comprising either type of light source will also be large in size. Additionally, since the life span of these light sources are several thousands of hours at best, they need to be replaced frequently. In an effort to solve these problems, a light emitting diode (LED) having a relatively longer life span has been used as an alternative light source. For example, U.S. Patent Publication Application No. 2003-0133080 entitled "LED-Illumination-Type DMD Projector and Optical System Thereof" discloses an image projection apparatus using an LED.

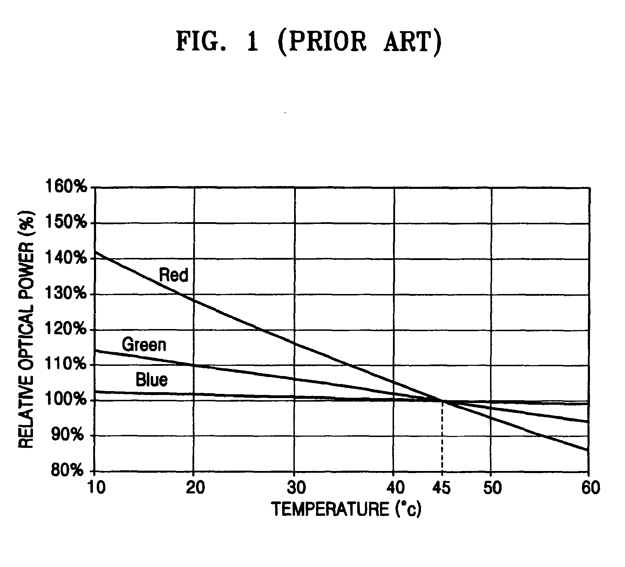

However, when a LED is operated, heat is typically generated and the optical efficiency of the LED depends on its temperature. Figure 1 is a graph showing changes in relative optical power of a LED with temperature. Where the relative optical power corresponding with 45°C is assumed to be 100%, the relative optical power increases as the temperature decreases. Similarly, the relative optical power decreases as the temperature increases. Thus, a heat radiating structure which can effectively dissipate heat generated by the LED is required. Korean Patent Publication Application No. 2004-37523 discloses such a heat radiating structure, in which a heat radiating fin that is disposed around the LED in a circular manner.

The amount of light generated by a LED is smaller than that generated by a metal halide lamp or super high-pressure mercury lamp. Thus, in order to obtain an adequate level of illumination, a LED array is used. An illumination unit for an image projecting apparatus can include a plurality of LEDs emitting lights of different colours. In this case, at least one heat radiating structure, such as that disclosed by Korean Patent Publication Application No. 2004-37523, must be provided for each of the LEDs, increasing the size of the illumination unit.

Prior arrangements, in which a heat dissipation means is common to multiple LEDs, are disclosed in JP 11-64849 A and EP 1 439 412. In addition, an illumination unit in which a plurality of LED/collimator modules are provided in a stacked array is disclosed in JP 2004-53949 A.

It is an object of the present invention to provide an illumination unit capable of effectively dissipating heat generated during operation of a LED, and an image projecting apparatus employing the same.

According to a first aspect of the invention, an illumination unit comprising a first heat conducting plate and a plurality of light source modules arranged to emit a plurality of lights having different colors, each light source module comprising a plurality of LED groups, in which one or more LEDs are linearly arranged, mounted on the first heat conducting plate and a plurality of collimator groups having at least one corresponding collimator to collimate light emitted from the at least one LED, wherein the at least one collimator comprises a light incidence surface arranged to receive light from the at least one corresponding LED, a parabolic reflection surface to reflect the received light in substantially one direction and a light exit surface, wherein, in the at least one collimator, said parabolic reflection surface faces the light incident surface and said light exit surface faces the parabolic reflection surface and extends between the parabolic reflection surface and the light incident surface, in the LED groups, the at least one LED is disposed at a focal point of the parabolic reflection surface of the at least one corresponding collimator, the LED groups are arranged in a stepwise manner with respect to one another and a plurality of mounting portions being arranged in a stepwise manner on the first heat conducting plate to correspond with the LED groups, the LEDs of the corresponding LED groups being mounted thereon.

The use of a heat dissipation means that is common to two or more light source modules allows the provision of heat dissipation means for a plurality of light source modules having a relatively small overall volume, when compared with prior art arrangements in which separate heat dissipation means are provided for each LED. This can result in an illumination unit that is relatively compact.

This aspect also provides an image display apparatus comprising an optical modulation element and said illumination unit.

The illumination unit may further comprise a second heat conducting plate, on which second LED groups are mounted. In such an illuminating unit, the second LED groups may be arranged in a stepwise manner with respect to one another. Second mounting portions are provided on the second heat conducting plate in a stepwise manner with respect to one another to correspond with the respective second LED groups.

Embodiments of the invention will now be described with reference to the accompanying drawings, of which:
Figure 1 is a graph illustrating a relationship between a temperature and a relative optical power of a LED;
Figure 2 is an exploded perspective view of an illumination unit outside the scope of the present invention;
Figure 3 is a cross sectional view of a light source module of the illumination unit of Figure 2 that is suitable for use in an embodiment of the invention;
Figure 4 is a partially cut-away perspective view of a LED suitable for use in an embodiment of the present invention;
Figure 5 is a perspective view of a light source module having LEDs and collimators for use in another illumination unit outside the scope of the present invention;
Figure 6 is a perspective view of a light source module having LEDs and collimators arranged in two dimensions according to an embodiment of the present invention;
Figure 7 is a perspective view of a light source module having LEDs and collimators arranged in two dimensions according to another embodiment of the present invention;
Figure 8 is an exploded perspective view of an illumination unit according to another embodiment of the present invention; and
Figure 9 is a view of an image projecting apparatus according to an embodiment of the present invention.

In the accompanying drawings, like reference numerals refer to the like elements throughout.

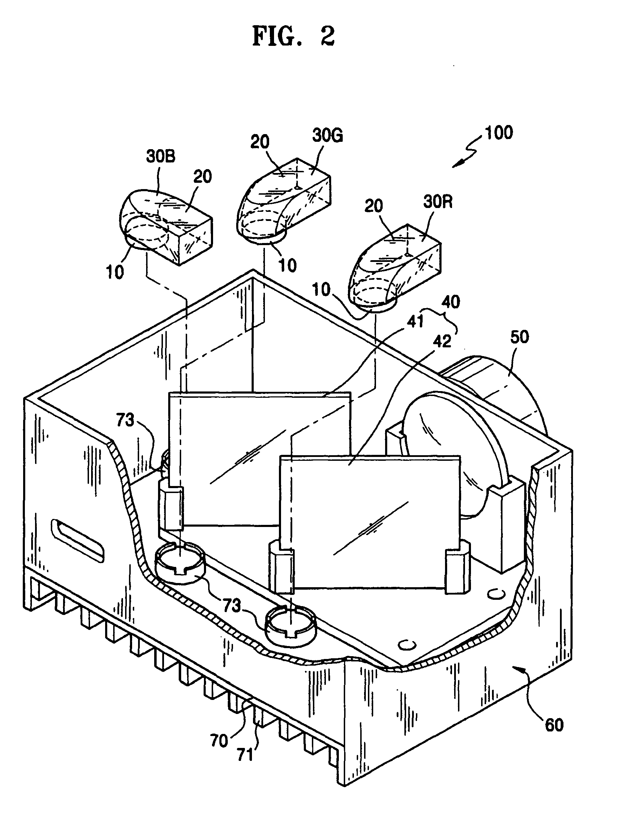

Referring to Figure 2, an illumination unit 100 that is outside the scope of the present invention includes light source modules 30R, 30G, and 30B arranged to emit red (R), green (G), and blue (B) light respectively, and a first heat conducting plate 70 on which the light source modules 30R, 30G, and 30B are mounted. Each of the light source modules 30R, 30G, and 30B includes an LED 10 and a collimator 20 arranged to collimate light emitted by the LED 10.

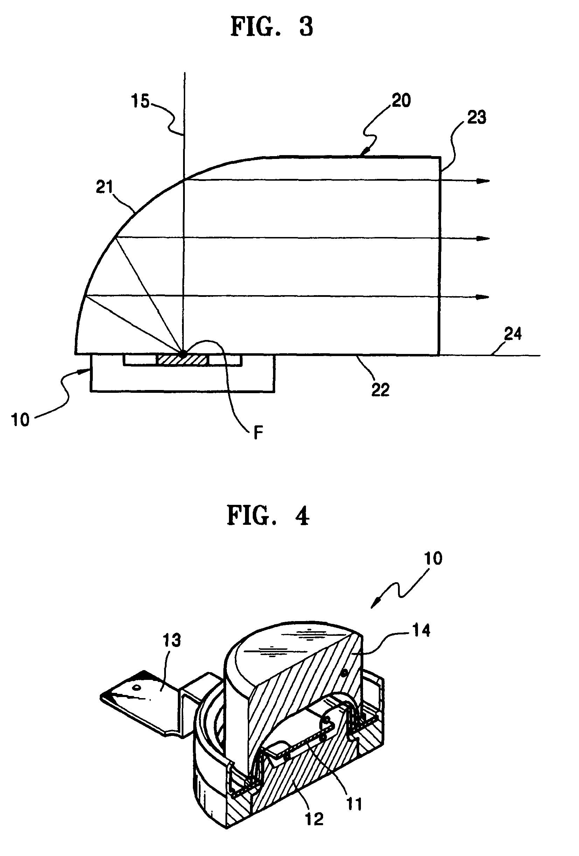

Figure 3 is a cross sectional view of a light source module 30R, 30G, or 30B.

As shown in Figure 3, the collimator 20 includes a parabolic reflection surface 21, a light incident surface 22 facing the parabolic reflection surface 21 and a light exit surface 23 extending between the parabolic reflection surface 21 and the light incident surface 22. The collimator 20 is a transparent body comprising, for example, glass having a parabolic reflection surface 21 at one end.

The parabolic reflection surface 21 may be formed by coating a reflective material on an outer surface of the end of the transparent body having the parabolic surface. The parabolic reflection surface 21 is an aspheric surface having the conic coefficient K between -0.4 through -2.5. In particular, the conic coefficient K of the parabolic reflection surface 21 may be between -0.7 through -1.6, for example, K may be equal to -1. The parabolic reflection surface 21 may have a conic coefficient K of the parabolic reflection surface 21 selected from the above range so that the collimator 20 collimates the light emitted from the LED 10 at a range of a radiation angles in order to effectively illuminate an object.

The light incident surface 22 may be a surface that includes a principal axis 24 of the parabolic reflection surface 21, may be parallel to a plane that includes the principal axis 24, or may be inclined at a predetermined angle with respect to the plane that includes the principal axis 24.

Figure 4 is a partially cut-away perspective view of a LED 10. The LED 10 includes an LED chip 11 configured to emit light, a heat conducting body 12 to dissipate heat generated by the LED chip 11 and an electrode 13 arranged to supply a current to the LED chip 11. The LED 10 may further include a dome lens or cap 14 to cover the LED chip 11. Since the configuration of the LED 10 should be known to those skilled in the art, a detailed description thereof is omitted herein.

Referring to Figures 3 and 4, the LED 10 is disposed at a focal point F of the parabolic reflection surface 21. In other words, the LED 10 is installed such that the LED chip 11 is disposed at the focal point F of the parabolic reflection surface 21. Since the LED chip 11 is a surface light source, not a point light source, it cannot be disposed exactly at the focal point F of the parabolic reflection surface 21. Thus, the LED 10 is disposed at around the focal point F of the parabolic reflection surface 21. Although, in Figure 3, the LED 10 is arranged so that its optical axis 15 is substantially perpendicular to the principal axis 24 of the parabolic reflection surface 21, other arrangements that achieve the intended purpose may alternatively be used.

If required, the collimator 20 may further include a concave portion (not shown), formed in the light incident surface 22, to provide a recess to accommodate a dome lens 14. The LED 10 may be combined to the light incident surface 22.

As shown in Figure 3, the light emitted from the LED chip 11 passes through the light incident surface 22 into the collimator 20. The light is then reflected by the parabolic reflection surface 21 and collimated into beams that are substantially parallel to the principal axis 24 of the collimator 20. The collimated parallel beam then exits the collimator 20 through the light exit surface 23. The collimated beams are substantially parallel to each other because the LED chip 11 is a surface light source. In other words, the light is not collimated to be a perfectly parallel beam, because the light beams are not all emitted from the focal point F and are instead emitted from different positions along the surface light source.

Heat is generated when the LED 10 is operated. As discussed above in relation to Figure 1, the optical efficiency of the LED 10 depends on its temperature. Thus, a heat conducting structure may be used to effectively dissipate the heat generated by the LED 10. In the illumination unit of Figure 2, the LED 10 is directly mounted on the first heat conducting plate 70 such that the heat generated by the LED 10 can be effectively dissipated via the first conducting plate 70.

Referring back to Figure 2, the LED 10 of each of light source module 30R, 30G, and 30B is mounted on the first heat conducting plate 70. A mounting portion 73 on which the LED 10 is mounted can be provided on the first heat conducting plate 70. The heat conducting body 12 of the LED 10, shown in Figure 4, contacts the first heat conducting plate 70 directly or through the mounting portion 73.

The first heat conducting plate 70 may be manufactured of a metal, such as aluminium, and may have a plurality of heat conducting fins 71 as illustrated in Figure 2. Although not illustrated in the drawings, the first heat conducting plate 70 can be an evaporating portion of a heat pipe. The heat generated during the operation of the LED 10 is transferred to the first heat conducting plate 70 via the heat radiating body 12 of the LED 10. In this manner, an illumination unit having a simple heat conducting structure which can effectively cool the LEDs 10 of the light source modules 30R, 30G, and 30B can be realised.

The amount of light produced by the LED 10 is generally less than that of a metal halide lamp or a super high-pressure mercury lamp. In order to provide an increased light output, each of the light source modules 30R, 30G, and 30B can include a plurality of LEDs 10 and collimators 20. Since the collimator 20 utilises a parabolic reflection surface 21, the light can be collimated at a higher efficiency when compared with alternative arrangements in which a lens is used.

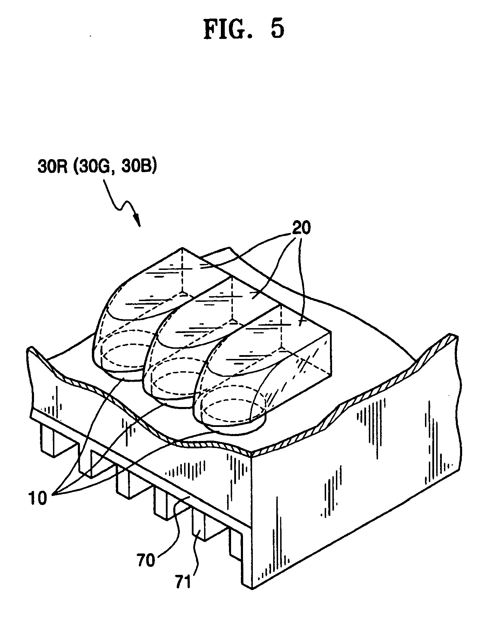

Figure 5 depicts a light source module having a plurality of LEDs 10 and a plurality of collimators 20 arranged in a one dimensional array, in an arrangement outside the scope of the present invention. The LEDs 10 are mounted on the first heat conducting plate 70.

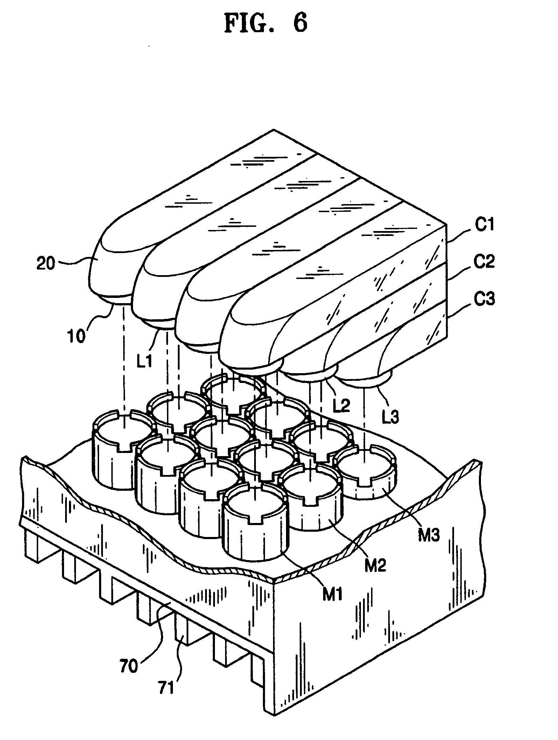

Alternatively, the LEDs 10 and the collimators 20 can be arranged in a two dimensional array. Figure 6 illustrates a light source module having the LEDs and the collimators arranged in two dimensions according to an embodiment of the present invention. In this particular example, each of three collimator groups C1, C2, and C3 comprises four collimators 20, which are linearly arranged. Meanwhile, each of three LED groups L1, L2, and L3 comprises four LEDs 10, which are also linearly arranged. The LED groups L1, L2, and L3 are arranged in a stepwise manner with respect to one another. Three mounting portions M1, M2, and M3 on which the LEDs 10 of the LED groups L1, L2, and L3 are mounted are provided on the first heat conducting plate 70. The three mounting portions M1, M2, and M3 are also arranged in a stepwise manner to correspond with the three LED groups L1, L2, and L3. Accordingly, the heat generated by the LEDs 10 in the LED groups L1, L2, and L3 can be effectively dissipated to the first heat conducting plate 70.

Referring back to Figure 2, the illumination unit 100 may further include a housing 60 to accommodate the light source modules 30R, 30G, and 30B. The first heat conducting plate 70 forms part of the housing 60. For example, the first heat conducting plate 70 can form a lower plate of the housing 60. The illumination unit further includes a colour synthesising member 40, arranged to guide the light emitted from the light source modules 30R, 30G, and 30B so that it proceeds along a single optical path, and a condensing lens unit 50 arranged to condense the light onto an object to be illuminated.

The colour synthesising member 40 may include first and second dichroic filters 41 and 42 arranged parallel to each other. The first dichroic filter 41 reflects green light while the second dichroic filter 42 reflects blue light and green light. Red light emitted from the light source module 30R is transmitted through the second dichroic filter 42 and enters the condensing lens unit 50. The green light emitted from the light source module 30G is reflected by the first and second dichroic filters 41 and 42 before entering the condensing lens unit 50. The blue light emitted from the light source module 30B is transmitted through the first dichroic filter 41 and reflected by the second dichroic filer 42, and then enters the condensing lens unit 50. Thus, the light emitted from each of the light source modules 30R, 30G, and 30B is guided to the condensing lens unit 50 by the colour synthesising member 40. The colour synthesising member 40 and the condensing lens unit 50 are mounted on the first heat conducting plate 70 and are accommodated in the housing 60. Accordingly, a modular illumination unit can be realized.

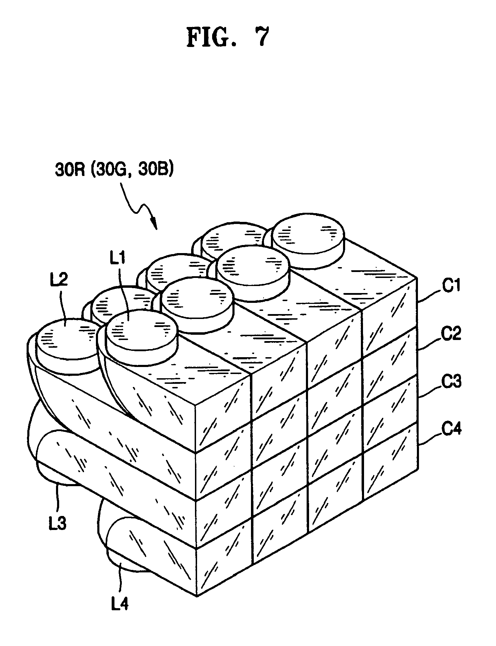

Figure 7 illustrates a light source module having LEDs and collimators arranged in an alternative two dimensional array, according to another embodiment of the present invention. Each of collimator groups C1, C2, C3, and C4 has four collimators 20, which are arranged linearly, while each of LED groups L1, L2, L3, and L4 has four LEDs 10, which are also arranged linearly. The collimator groups C1 and C2 and the LED groups L1 and L2 are arranged so that the LEDs 10 in those groups face upward while the collimator groups C3 and C4 and the LED groups L3 and L4 are arranged such that the LEDs 10 in those groups face downward. The LED groups L1 and L2 are arranged in an upward stepwise manner with respect to each other while the LED groups L3 and L4 are arranged in a downward stepwise manner with respect to each other.

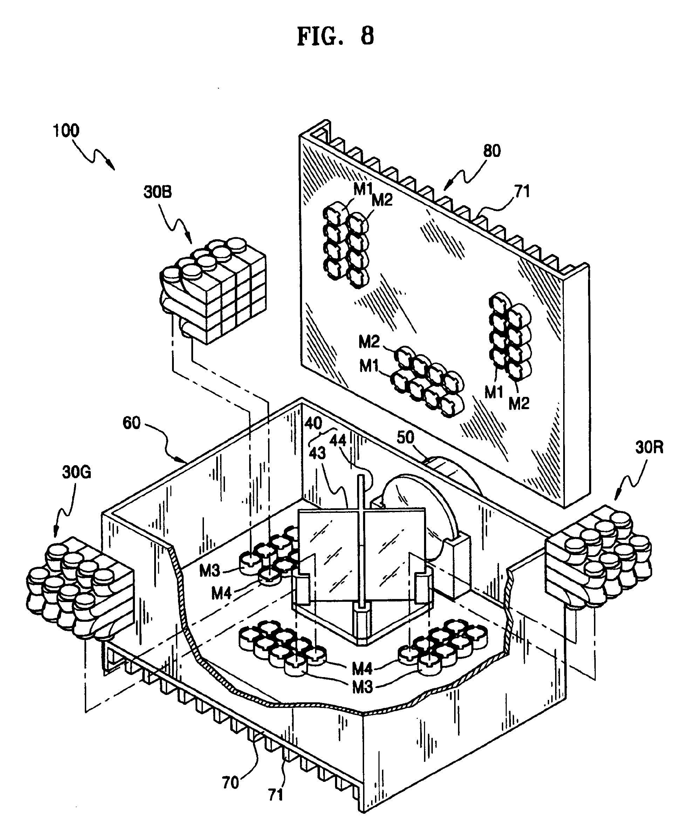

Figure 8 illustrates an illumination unit 100 comprising a plurality of light source modules as shown in Figure 7. In order to cool the LEDs 10 of the light source modules 30R, 30G, and 30B, the illumination unit 100 is provided with a second heat conducting plate 80 located so that it is opposite to the first heat conducting plate 70. The first and second heat conducting plates 70 and 80 may be upper and lower plates of the housing 60, respectively. Mounting portions M3 and M4 are arranged on the first heat conducting plate 70 in a stepwise manner to correspond with the LED groups L3 and L4 such that the LEDs 10 of the LED groups L3 and L4 can be mounted thereon. Mounting portions M1 and M2 are arranged opposite to the mounting portions M3 and M4 on the second heat conducting plate 80 in a stepwise manner to correspond with the LED groups L1 and L2 such that the LEDs 10 of the LED groups L1 and L2 can be mounted thereon. Accordingly, the heat generated during the operation of the LEDs 10 in the LED groups L1, L2, L3, and L4 is dissipated through the first and second heat conducting plates 70 and 80.

In the illumination unit of Figure 8, the colour synthesising member 40 includes third and fourth dichroic filters 43 and 44 disposed in a crosswise arrangement. The third dichroic filter 43 reflects blue light while the fourth dichroic filter 44 reflects red light. Green light is transmitted through the third and fourth dichroic filters 43 and 44. Thus, the light emitted from each of the light source modules 30R, 30G, and 30B is guided to the condensing lens unit 50 by the colour synthesising member 40. The colour synthesising member 40 and the condensing lens unit 50 are mounted on the first heat conducting plate 70 and are accommodated in the housing 60. Accordingly, a modular illumination unit can be realized.

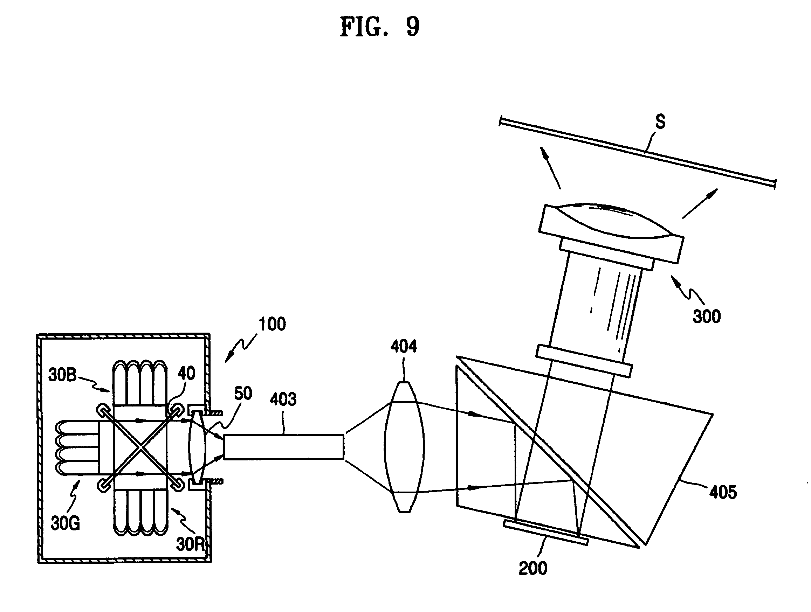

The modular illumination units 100 illustrated in Figures 2 to 8 can be employed as an illumination unit in an image projecting apparatus. Figure 9 illustrates an image projecting apparatus comprising such an illumination unit 10, according to an embodiment of the present invention.

The image projecting apparatus includes the illumination unit 100, an optical modulation element 200, and a projection lens unit 300. The illumination unit 100 sequentially emits red (R), green (G), and blue (B) light.

The red (R), green (G), and blue (B) light emitted from the illumination unit 100 are incident on an integrator 403. The integrator 403 forms a surface light having a uniform light intensity. The integrator 403 may comprise a glass rod having a rectangular section or a light tunnel having an internal reflection surface.

A relay lens unit 404 magnifies or contracts the light emitted from the integrator 403 to correspond to an aperture of the optical modulation element 200.
The light then passes through a total internal reflection prism (TIR) 405 and is incident on the optical modulation element 200.

The optical modulation element 200 sequentially modulates the red (R), green (G), and blue (B) light from the illumination unit 100, according to image data. The image data may include pixel information about images to be formed on a screen S. The image projecting apparatus may be a single panel type image projecting apparatus using a single reflection type optical modulation element. For example, a digital micromirror device (DMD) can be used as the optical modulation element 200. Alternatively, a transmission type optical modulation element, such as an LCD panel, not shown, can be used as the optical modulation element 200.

The modulated light is then guided toward the projection lens unit 300 by the TIR prism 405. The projection lens unit 300 magnifies the modulated light and projects the same toward the screen S.

In each of the above described embodiments, a light source is provided in the form of an LED. By employing an LED, a life span of an illumination unit is extended and the image projecting apparatus can be made compact.

Additionally, since light emitted from the LED is collimated using a parabolic reflection surface, in other words, without using a lens, the brightness of the image produced by an image projecting apparatus comprising the illumination unit can be improved. Furthermore, the when a LED array is used as a light source in the illumination unit, the parabolic reflection surface 21 collimates the light produced by the LED array more effectively than a lens.

Since the LEDs used in the illumination unit 100 are cooled using a common heat conducting plate 70, 80, variations in an amount of light emitted by the LEDs due to temperature changes can be prevented. Thus, the brightness of the image projecting apparatus can be improved and maintained.

The use of a modular illumination unit 100 enables the provision of a compact image projecting apparatus having a simplified structure.

In summary, the illumination unit 100 of the above described embodiments may have the following advantages.

Firstly, since a LED is used as a light source, an illumination unit and an image projecting apparatus have a long life span and a compact size can be realized.

Secondly, since the light emitted from the LED is collimated using a parabolic reflection surface, the light can be collimated at a high efficiency whether a single LED or a LED array is used.

Thirdly, since a plurality of LEDs are cooled using a common heat conducting plate, variations in the amount of light emitted by the LED as a result of temperature changes can be prevented so that the brightness of the illumination unit and the image projecting apparatus can be improved and maintained.

Fourthly, since the illumination unit is modular, a compact image projecting apparatus having a simplified structure can be realized.

Although a few embodiments of the present general inventive concept have been shown and described, it will be appreciated by those skilled in the art that changes may be made in these embodiments without departing from the principles of the invention, the scope of which is defined in the appended claims.

## Claims

1. An illumination unit (100) comprising:
a first heat conducting plate (70); and
a plurality of light source modules (30B, 30G, 30R) arranged to emit a plurality of lights having different colors, each light source module (30B, 30G, 30R) comprising a plurality of LED groups (L1, L2) in which one or more LEDs (10) are linearly arranged, mounted on the first heat conducting plate (70) and a plurality of collimator groups (C1, C2) having at least one corresponding collimator (20) to collimate light emitted from the at least one LED (10);
wherein the at least one collimator (20) comprises a light incidence surface (22) arranged to receive light from the at least one corresponding LED (10), a parabolic reflection surface (21) to reflect the received light in substantially one direction and a light exit surface (23);
**characterised in that**
in the at least one collimator (20), said parabolic reflection surface (21) faces the light incident surface (22) and said light exit surface (23) faces the parabolic reflection surface (21) and extends between the parabolic reflection surface (21) and the light incident surface (22);
in the LED groups (L1, L2), the at least one LED (10) is disposed at a focal point of the parabolic reflection surface (21) of the at least one corresponding collimator (20);
the LED groups (L1, L2) are arranged in a stepwise manner with respect to one another; and
a plurality of mounting portions (M1, M2) are arranged in a stepwise manner on the first heat conducting plate (70) to correspond with the LED groups (L1, L2), the LEDs (10) of the corresponding LED groups (L1, L2) being mounted thereon.

2. The illumination unit (100) as claimed in claim 1, further comprising:
a color synthesizing member (40) arranged to guide the plurality of lights emitted by the plurality of light source modules (30B, 30G, 30R) to propagate along a single optical path;
a condensing lens unit (50) arranged to condense the guided light output from the color synthesizing member (40); and
a housing (60) arranged to accommodate the plurality of light source modules (30B, 30G, 30R), the color synthesizing member (40) and the condensing lens unit (50);
wherein the first heat conducting plate (70) is part of the housing (60).

3. The illumination unit (100) as claimed in claim 1, further comprising:
a second heat conducting plate (80);
wherein:
LEDs of a plurality of second LED groups (L3, L4) are mounted on the second heat conducting plate (80);
the second LED groups (L3, L4) in a stepwise manner, with respect to one another; and
second mounting portions (M3, M4) are provided on the second heat conducting plate (80) in a stepwise manner with respect to one another to correspond with the second LED groups (L3, L4), the LEDs of the corresponding second LED groups (L3, L4) being mounted thereon.

4. The illumination unit (100) as claimed in claim 3, further comprising:
a color synthesizing member (40) arranged to guide the plurality of lights emitted from the plurality of light source modules (30B, 30G, 30R) to propagate along a single optical path;
a condensing lens unit (50) arranged to condense the guided light output from the color synthesizing member (40); and
a housing (60) arranged to accommodate the plurality of light source modules (30B, 30G, 30R), the color synthesizing member (40), and the condensing lens unit (50),
wherein the first and second heat conducting plates (70, 80) are part of the housing (60).

5. The illumination unit (100) as claimed in claim 3 or 4, wherein the LEDs (10) of the LED groups (L1, L2) are arranged to emit light in a first direction, and the LEDs of the second LED groups (L3, L4) are arranged to emit light in a second direction different from the first direction.

6. The illumination unit (100) as claimed in claim 5, wherein the first direction is opposite to the second direction.

7. The illumination unit (100) as claimed in claim 5 or 6, wherein the at least one corresponding collimator is arranged to collimate the lights received from the first and second directions into a third direction that is different from the first and second directions.

8. The illumination unit (100) as claimed in any of the preceding claims, wherein said parabolic reflection surface (21) has a conic coefficient between -0.4 and -2.5.

9. The illumination unit (100) as claimed in any of the preceding claims, wherein:
a first one of said collimator groups (C1), corresponding to a first one of said LED groups (L1), comprises one or more collimators (20) having a first length; and
a second one of said collimator groups (C2), corresponding to a second one of said plurality of LED groups (L2), said second one of said LED groups (L2) comprising one or more collimators (20) having a second length, said second length being different from the first length.

10. The illumination unit (100) as claimed in claim 4, 5, 6, 7 or 9, wherein:
the housing (60) is arranged so that the first heat conducting plate (70) is an upper plate thereof and the second heat conducting plate (80) is a lower plate thereof.

11. An image projecting apparatus, comprising:
an illumination unit (100) according to any of the preceding claims arranged to sequentially emit a plurality of lights having different colors;
an optical modulation element (200) to sequentially modulate the plurality of lights received from the illumination unit (100) according to image information; and
a projection lens unit (300) to project the modulated light onto a screen (S).

## Patentansprüche

1. Beleuchtungseinheit (100), enthaltend:
eine erste wärmeleitende Platte (70); und
eine Vielzahl von Lichtquellenmodulen (30B, 30G, 30R), die so eingerichtet sind, das sie unterschiedliches Licht unterschiedlicher Farben emittieren, wobei jedes Lichtquellenmodul (30B, 30G, 30R) eine Vielzahl von LED-Gruppen (L1, L2), in denen eine oder mehrere LEDs (10) linear angeordnet sind und die auf der ersten wärmeleitenden Platte (70) angebracht sind, und eine Vielzahl von Kollimatorgruppen (C1, C2) enthält, die wenigstens einen Kollimator (20) enthalten, um Licht, das von der wenigstens einen LED (10) abgestrahlt wird, parallel zu richten;
wobei der wenigstens eine Kollimator (20) eine Lichteinfallsfläche (22), die derart angeordnet ist, dass sie Licht von der wenigstens einen entsprechenden LED (10) empfängt, eine parabolische Reflexionsfläche (21), die das empfangene Licht in wenigstens einer Richtung reflektiert, und eine Lichtaustrittsfläche (23) enthält;
**dadurch gekennzeichnet, dass**:
bei dem wenigstens einen Kollimator (20) die parabolische Reflexionsfläche (21) der Lichteinfallsfläche (22) zugewandt ist und die Lichtaustrittsfläche (23) der parabolischen Reflexionsfläche (21) zugewandt ist und sich zwischen der parabolischen Reflexionsfläche (21) und der Lichteinfallsfläche (22) erstreckt;
bei den LED-Gruppen (L1, L2) die wenigstens eine LED (10) an einem Brennpunkt der parabolischen Reflexionsfläche (21) des wenigstens einen entsprechenden Kollimators (20) angeordnet ist;
die LED-Gruppen (L1, L2) stufenartig zueinander angeordnet sind; und
eine Vielzahl von Anbringungsabschnitten (M1, M2) stufenartig auf der ersten wärmeleitfähigen Platte (70) angeordnet sind, so dass sie den LED-Gruppen (L1, L2) entsprechen, wobei die LEDs (10) der entsprechenden LED-Gruppen (L1, L2) darauf angebracht sind.

2. Beleuchtungseinheit (100) nach Anspruch 1, weiterhin enthaltend:
ein Farbsynthetisierelement (40), das so angeordnet ist, dass es das unterschiedliche Licht, das von der Vielzahl von Lichtquellenmodulen (30B, 30G, 30R) emittiert wird, derart leitet, dass es sich entlang eines einzigen optischen Weges ausbreitet;
eine Kondensorlinseneinheit (50), die so angeordnet ist, dass sie das geleitete Licht konzentriert, das aus dem Farbsynthetisierelement (40) ausgegeben wird; und
ein Gehäuse (60), das so eingerichtet ist, dass es die Vielzahl von Lichtquellenmodulen (30B, 30G, 30R), das Farbsynthetisierelement (40) und die Kondensorlinseneinheit (50) aufnimmt;
wobei die erste wärmeleitfähige Platte (70) Teil des Gehäuses (60) ist.

3. Beleuchtungseinheit (100) nach Anspruch 1, weiterhin enthaltend:
eine zweite wärmeleitfähige Platte (80);
wobei:
LEDs einer Vielzahl von zweiten LED-Gruppen (L3, L4) auf der zweiten wärmeleitfähigen Platte (80) angeordnet sind;
die zweiten LED-Gruppen (L3, L4) stufenartig im Bezug zueinander angeordnet sind; und
zweite Anbringungsabschnitte (M3, M4) auf der zweiten wärmeleitfähigen Platte (80) stufenartig im Bezug zueinander angeordnet sind, so dass sie den zweiten LED-Gruppen (L3, L4) entsprechen, wobei die LEDs der entsprechenden zweiten LED-Gruppen (L3, L4) darauf angebracht sind.

4. Beleuchtungseinheit (100) nach Anspruch 3, weiterhin enthaltend:
ein Farbsynthetisierelement (40), das so angeordnet ist, das es das unterschiedliche Licht, das von der Vielzahl von Lichtquellenmodulen (30B, 30G, 30R) emittiert wird so leitet, dass es sich entlang eines einzigen optischen Weges ausbreitet;
eine Kondensorlinseneinheit (50), die so angeordnet ist, dass sie das geleitete Licht konzentriert, das aus dem Farbsynthetisierelement (40) ausgegeben wird; und
ein Gehäuse (60), das so eingerichtet ist, dass es die Vielzahl von Lichtquellenmodulen (30B, 30G, 30R), das Farbsynthetisierelement (40) und die Kondensorlinseneinheit (50) aufnimmt,
wobei die erste und die zweite wärmeleitfähige Platte (70, 80) Teil des Gehäuses (60) sind.

5. Beleuchtungseinheit (100) nach Anspruch 3 oder 4, bei der die LEDs (10) der LED-Gruppen (L1, L2) so angeordnet sind, dass sie Licht in einer ersten Richtung emittieren, und die LEDs der zweiten LED-Gruppen (L3, L4) derart angeordnet sind, dass sie Licht in einer zweiten Richtung emittieren, die sich von der ersten Richtung unterscheidet.

6. Beleuchtungseinheit (100) nach Anspruch 5, bei der die erste Richtung der zweiten Richtung entgegengesetzt ist.

7. Beleuchtungseinheit (100) nach Anspruch 5 oder 6, bei der der wenigstens eine entsprechende Kollimator so angeordnet ist, dass er das unterschiedliche Licht, das aus der ersten und der zweiten Richtung empfangen wird, in eine dritte Richtung parallelrichtet, die sich von der ersten und der zweiten Richtung unterscheidet.

8. Beleuchtungseinheit (100) nach einem der vorhergehenden Ansprüche, bei der die parabolische Reflexionsfläche (21) einen konischen Koeffizienten zwischen - 0,4 und -2,5 hat.

9. Beleuchtungseinheit (100) nach einem der vorhergehenden Ansprüche, bei der:
eine erste der Kollimatorgruppen (C1), die einer ersten der LED-Gruppen (L1) entspricht, einen oder mehrere Kollimatoren (20) enthält, die eine erste Länge haben; und
eine zweite der Kollimatorgruppen (C2), die einer zweiten der Vielzahl von LED-Gruppen (L2) entspricht, einen oder mehrere Kollimatoren (20) enthält, die eine zweite Länge haben, wobei sich die zweite Länge von der ersten Länge unterscheidet.

10. Beleuchtungseinheit (100) nach Anspruch 4, 5, 6, 7 oder 9, bei der:
das Gehäuse (60) derart eingerichtet ist, dass die erste wärmeleitfähige Platte (70) eine obere Platte desselben ist und die zweite wärmeleitfähige Platte (80) eine untere Platte desselben ist.

11. Bildprojektionsgerät, enthaltend:
eine Beleuchtungseinheit (100) nach einem der vorhergehenden Ansprüche, die so eingerichtet ist, dass sie nacheinander unterschiedliches Licht unterschiedlicher Farben emittiert;
ein optisches Modulationselement (200), das nacheinander das unterschiedliche Licht, das von der Beleuchtungseinheit (100) empfangen wird, in Übereinstimmung mit Bildinformationen moduliert; und
eine Projektionslinseneinheit (300), die das modulierte Licht auf einen Bildschirm (S) projiziert.

## Revendications

1. Unité d'éclairage (100) comprenant :
une première plaque thermoconductrice (70) ; et
une pluralité de modules de source de lumière (30B, 30G, 30R) agencés pour émettre une pluralité de lumières ayant différentes couleurs, chaque module de source de lumière (30B, 30G, 30R) comprenant une pluralité de groupes de DEL (L1, L2) dans lesquels une ou plusieurs DEL (10) sont agencées linéairement, montés sur la première plaque thermoconductrice (70) et une pluralité de groupes de collimateurs (C1, C2) comportant au moins un collimateur (20) correspondant pour collimater la lumière émise par ladite au moins une DEL (10) ;
dans laquelle ledit au moins un collimateur (20) comprend une surface de réception de lumière (22) agencée pour recevoir la lumière provenant de ladite au moins une DEL (10) correspondante, une surface de réflexion parabolique (21) pour réfléchir la lumière reçue sensiblement dans une direction et une surface de sortie de lumière (23) ;
**caractérisée en ce que**
dans ledit au moins un collimateur (20), ladite surface de réflexion parabolique (21) fait face à la surface de réception de lumière (22) et ladite surface de sortie de lumière (23) fait face à la surface de réflexion parabolique (21) et s'étend entre la surface de réflexion parabolique (21) et la surface de réception de lumière (22) ;
dans les groupes de DEL (L1, L2), ladite au moins une DEL (10) est disposée à un foyer de la surface de réflexion parabolique (21) dudit au moins un collimateur (20) correspondant ;
les groupes de DEL (L1, L2) sont agencés de manière étagée les uns par rapport aux autres ; et
une pluralité de parties de montage (M1, M2) sont agencées d'une manière étagée sur la première plaque thermoconductrice (70) pour correspondre aux groupes de DEL (L1, L2), les DEL (10) des groupes de DEL (L1, L2) correspondants étant montées sur celles-ci.

2. Unité d'éclairage (100) selon la revendication 1, comprenant en outre :
un élément de synthèse de couleurs (40) agencé pour guider la pluralité de lumières émises par la pluralité de modules de source de lumière (30B, 30G, 30R) pour qu'elles se propagent le long d'un seul trajet optique ;
une unité de lentille condensatrice (50) agencée pour condenser la sortie de lumière guidée provenant de l'élément de synthèse de couleurs (40) ; et
un boîtier (60) agencé pour loger la pluralité de modules de source de lumière (30B, 30G, 30R), l'élément de synthèse de couleurs (40) et l'unité de lentille condensatrice (50) ;
dans laquelle la première plaque thermoconductrice (70) fait partie du boîtier (60).

3. Unité d'éclairage (100) selon la revendication 1, comprenant en outre :
une deuxième plaque thermoconductrice (80) ;
dans laquelle :
les DEL d'une pluralité de deuxièmes groupes de DEL (L3, L4) sont montées sur la deuxième plaque thermoconductrice (80) ;
les deuxièmes groupes de DEL (L3, L4) sont agencés d'une manière étagée les uns par rapport aux autres ; et
des deuxièmes parties de montage (M3, M4) sont prévues sur la deuxième plaque thermoconductrice (80) d'une manière étagée les unes par rapport aux autres pour correspondre avec les deuxièmes groupes de DEL (L3, L4), les DEL des deuxièmes groupes de DEL (L3, L4) correspondants étant montées sur celles-ci.

4. Unité d'éclairage (100) selon la revendication 3, comprenant en outre :
un élément de synthèse de couleurs (40) agencé pour guider la pluralité de lumières émises par la pluralité de modules de source de lumière (30B, 30G, 30R) pour qu'elles se propagent le long d'un seul trajet optique ;
une unité de lentille condensatrice (50) agencée pour condenser la sortie de lumière guidée provenant de l'élément de synthèse de couleurs (40) ; et
un boîtier (60) agencé pour loger la pluralité de modules de source de lumière (30B, 30G, 30R), l'élément de synthèse de couleurs (40) et l'unité de lentille condensatrice (50),
dans laquelle les première et deuxième plaques thermoconductrices (70, 80) font partie du boîtier (60).

5. Unité d'éclairage (100) selon la revendication 3 ou 4, dans laquelle les DEL (10) des groupes de DEL (L1, L2) sont agencées pour émettre une lumière dans une première direction, et les DEL des deuxièmes groupes de DEL (L3, L4) sont agencées pour émettre une lumière dans une deuxième direction différente de la première direction.

6. Unité d'éclairage (100) selon la revendication 5, dans laquelle la première direction est opposée à la deuxième direction.

7. Unité d'éclairage (100) selon la revendication 5 ou 6, dans laquelle ledit au moins un collimateur correspondant est agencé pour collimater les lumières reçues dans les première et deuxième directions dans une troisième direction qui est différente des première et deuxième directions.

8. Unité d'éclairage (100) selon l'une quelconque des revendications précédentes, dans laquelle ladite surface de réflexion parabolique (21) a un coefficient de conicité entre -0,4 et -2,5.

9. Unité d'éclairage (100) selon l'une quelconque des revendications précédentes, dans laquelle :
un premier desdits groupes de collimateurs (C1), correspondant à un premier desdits groupes de DEL (L1), comprend un ou plusieurs collimateurs (20) ayant une première longueur ; et
un deuxième desdits groupes de collimateurs (C2), correspondant à un deuxième de ladite pluralité de groupes de DEL (L2), ledit deuxième desdits groupes de DEL (L2) comprenant un ou plusieurs collimateurs (20) ayant une deuxième longueur, ladite deuxième longueur étant différente de la première longueur.

10. Unité d'éclairage (100) selon la revendication 4, 5, 6, 7 ou 9, dans laquelle :
le boîtier (60) est agencé de sorte que la première plaque thermoconductrice (70) soit une plaque supérieure de celui-ci et que la deuxième plaque thermoconductrice (80) soit une plaque inférieure de celui-ci.

11. Dispositif de projection d'image, comprenant :
une unité d'éclairage (100) selon l'une quelconque des revendications précédentes agencée pour émettre de manière séquentielle une pluralité de lumières ayant différentes couleurs ;
un élément de modulation optique (200) pour moduler de manière séquentielle la pluralité de lumières reçues de l'unité d'éclairage (100) conformément à des informations d'image ; et
une unité de lentille de projection (300) pour projeter la lumière modulée sur un écran (S).
